## Europäisches Patentamt
## European Patent Office
## Office européen des brevets

(11) Veröffentlichungsnummer: **0 210 286 B1**

(12) **EUROPÄISCHE PATENTSCHRIFT**

(45) Veröffentlichungstag der Patentschrift:
30.08.89

(21) Anmeldenummer: 85108631.4

(22) Anmeldetag: 11.07.85

(51) Int. Cl.⁴: **B23K 35/30**

(54) Zusatzwerkstoff zum Schweissen.

(43) Veröffentlichungstag der Anmeldung:
04.02.87 Patentblatt 87/6

(45) Bekanntmachung des Hinweises auf die Patenterteilung:
30.08.89 Patentblatt 89/35

(84) Benannte Vertragsstaaten:
AT BE CH DE FR GB IT LI NL SE

(56) Entgegenhaltungen:
DE-A- 3 025 199
DE-C- 522 656
US-A- 1 940 574
US-A- 2 079 480
US-A- 2 166 700
US-A- 2 220 464

(73) Patentinhaber: Berkenhoff GmbH,
Eduard-Berkenhoff-Strasse 14,
D-6301 Heuchelheim-Kinzenbach(DE)

(72) Erfinder: Dommer, Erich, Dipl.-Ing., Amselweg 4,
D-6301 Heuchelheim(DE)
Erfinder: Rechtziegel, Bruno, Kinzenbacherstrasse 21,
D-6301 Heuchelheim(DE)
Erfinder: Tauber, Klaus, Borngasse 6 A,
D-6301 Biebertal(DE)

(74) Vertreter: Missling, Arne, Dipl.-Ing. et al, Patentanwälte
Dipl.-Ing. R. Schlee Dipl.-Ing. A. Missling
Bismarckstrasse 43, D-6300 Giessen(DE)

ACTORUM AG

## Beschreibung

Die Erfindung betrifft einen Zusatzwerkstoff für das Schweißen von Stahl und Eisen, Kupfer und Kupferlegierungen, mit und ohne Oberflächenbehandlung.

Ein Zusatzwerkstoff für das Schweißen und Hartlöten soll eine gute Benetzung der Oberfläche und ein gutes Ausfließen auch auf oberflächenbehandelten, z.B. verzinkten Grundwerkstoffen erbringen. Die mit dem Zusatzwerkstoff erhaltene Schweißnaht sollte keine Schuppen, Poren und keine sichtbaren Ansätze haben und darüberhinaus nicht zu stark aufbauen. Eine weitere Forderung an den Zusatzwerkstoff besteht darin, daß dieser nicht spritzen soll. Falls der Zusatzwerkstoff diese Forderungen nicht erfüllt, so ist eine relativ große Nacharbeit erforderlich, was z.B. in der Automobilindustrie einen erheblichen Schleifaufwand bedeutet, da die Oberflächen für die nachfolgende Lackierung frei von Spritzern etc. sein muß.

Bekannt sind nach DIN 1733 Zusatzwerkstoffe S–CuSn und S–CuSi3, wobei der Zusatzwerkstoff S–CuSn mindestens 98% Kupfer aufweist und daneben noch 0,5 bis 1% Sn, 0,1 bis 0,5% Si und 0,1 bis 0,5% Mn. Daneben sind noch 0 bis 0,02% P zulässig und zusätzlich die üblichen Verunreinigungen. Der Zusatzwerkstoff S–CuSi3 besteht zu 2,8 bis 4,5% aus Si, zu 0,5 bis 1,5% aus Mn und Rest Kupfer. Zulässig sind auch noch Beimengungen von 0 bis 1,5% Sn, 0 bis 0,5% Fe und Zink von 0 bis 0,5% sowie die üblichen Verunreinigungen. Diese vorstehenden Legierungen erfüllen jedoch nicht die zuvor aufgestellten Forderungen an den Zusatzwerkstoff, so daß bei Verwendung dieser Legierungen doch eine erhebliche Nacharbeit an den Schweißnähten erforderlich ist.

Der Erfindung liegt die Aufgabe zugrunde, einen Schweißzusatz der eingangs genannten Art so auszubilden, daß dieser eine gute Benetzung und ein gutes Ausfließen auch bei oberflächenbehandelten Grundwerkstoffen zeigt, daß dieser keine Schuppen und keine sichtbaren Ansätze aufweist und nicht zu stark aufbaut und keine Poren zeigt und keine bis lediglich eine vergleichsweise geringe Spritzerbildung aufweist.

Diese Aufgabe wird mit den Merkmalen des kennzeichnenden Teils des Anspruches 1 gelöst.

Ein erfindungsgemäß ausgebildeter Zusatzwerkstoff besteht somit aus

| | |
|---|---|
| 0,8 – 2,5% | Si |
| 0,1 – 0,4% | Sn |
| 0,6 – 1,5% | Mn |
| 0,005 – 0,020% | P und/oder |
| 0,002 – 0,020% | B |

wobei Phosphor und Bor zusammen weniger als 0,020% betragen sollen. Die Verunreinigung an Blei muß kleiner als 0,02% sein, während die sonstigen Verunreinigungen kleiner als 0,5% sein sollen. Eine erfindungsgemäße Legierung zeigt nicht nur ein gutes Benetzungs- und Ausfließverhalten, auch bei oberflächenbehandelten Grundwerkstoffen, sondern bildet eine Naht, die praktisch keine Schuppen und sichtbaren Ansätze aufweist. Die Naht ist weitgehend porenfrei, wobei der Zusatzwerkstoff beim Schweißen nicht oder nur unwesentlich spritzt, so daß Nachbehandlungen weitestgehend entfallen. Darüber hinaus hat die erfindungsgemäße Legierung den Vorteil, daß sie im Vergleich zur bekannten Schweißlegierung S–CuSn eine wesentlich höhere Festigkeit der Schweißverbindung aufweist. Im Vergleich zur bekannten Schweißlegierung S–CuSi3 hat sie eine bessere thermische und elektrische Leitfähigkeit, während die gute Korrosionsbeständigkeit der S–CuSi3-Legierung erhalten bleibt. Der erfindungsgemäße Zusatzwerkstoff zeigt somit keine Anfälligkeit gegen elektrochemische Spannungskorrosion bei seinem Einsatz bei Stahlblechen, da er eine passivierende Oberfläche bildet. Der Zusatzwerkstoff ist somit auch für die Verbindung von zinkbeschichteten Stahlblechen geeignet. Der Grund für die gute Verwendbarkeit für die Verbindung von zinkbeschichteten Stahlblechen wird vermutlich dadurch erreicht, daß der niedrigere Si- und Mn-Gehalt ein metallurgisches Lösungsvermögen für aus dem Grundwerkstoff bzw. aus der Oberflächenbeschichtung aufschwimmendes Zn und Fe in der Schmelze ermöglicht, wobei die homogene Phase erhalten bleibt, so daß beim Erstarren des Schweißzusatzes sich weder Poren bilden noch eine Versprödung auftritt.

Der Zusatzwerkstoff eignet sich somit insbesondere für die Anwendung im Karosserie- und Automobilteilebau, wie z.B. für das Einschweißen verzinkter Tankstutzen. Die besten Ergebnisse werden mit einer Legierung von 1,8% Si, 0,2% Sn, 1% Mn, 0,008% P und 0,01% B, Rest Cu, erreicht, wobei die Verunreinigungen an Blei kleiner als 0,020 und die sonstigen Verunreinigungen zusammen kleiner als 0,2 % sind.

## Patentansprüche

1. Zusatzwerkstoff für das Schweißen von Stahl und Eisen, Kupfer und Kupferlegierungen, mit und ohne Oberflächenveredelung, dadurch gekennzeichnet, daß der Zusatzwerkstoff in Gew.-% folgende Zusammensetzung aufweist:

| | |
|---|---|
| 0,8 – 2,5% | Si |
| 0,1 – 0,4% | Sn |
| 0,6 – 1,5% | Mn |
| 0,005 – 0,020% | P und/oder |
| 0,002 – 0,020% | B |

wobei P und B zusammen kleiner als 0,020% sind,
Rest Kupfer,
Verunreinigungen Pb kleiner als 0,02%,
sonstige Verunreinigungen zusammen kleiner als 0,5%.

2. Zusatzwerkstoff nach Anspruch 1, gekennzeichnet durch folgende Zusammensetzung in Gew.-%:

1,80% Si,
0,20% Sn,
1,00% Mn,
0,008% P,
0,01% B,
Rest Kupfer,
Verunreinigungen Pb kleiner als 0,02%,
sonstige Verunreinigungen zusammen kleiner als 0,2%.

3. Elektrode, dadurch gekennzeichnet, daß sie aus einem Zusatzwerkstoff nach Anspruch 1 oder 2 hergestellt ist.

**Revendications**

1. Matériau d'apport pour la soudure de fer et d'acier, de cuivre et d'alliages de cuivre, avec ou sans conditionnement de surface, caractérisé en ce que le matériau d'apport présente en pourcentage en poids, la composition suivante:

| | |
|---|---|
| 0,8 – 2,5% | Si |
| 0,1 – 0,4% | Sn |
| 0,6 – 1,5% | Mn |
| 0,005 – 0,020% | P et/ou |
| 0,002 – 0,020% | B |

P et B ensemble étant inférieurs à 0,020%,
solde cuivre,
impuretés Pb inférieures à 0,02%,
impuretés diverses totales inférieures à 0,5%.

2. Matériau d'apport selon la revendication 1, caractérisé par la composition suivante en pourcentage en poids:

1,80% Si,
0,20% Sn,
1,00% Mn,
0,008% P,
0,01% B,
solde cuivre,
impuretés Pb inférieures à 0,02%,
impuretés diverses totales inférieures à 0,2%.

3. Electrode caractérisée en ce qu'elle est constituée d'un matériau d'apport selon la revendication 1 ou 2.

**Claims**

1. Filler material for welding steel and iron, copper and copper alloys, with or without surface improvement, characterised in that the filler material has the following composition in per cent by weight:

| | |
|---|---|
| 0.8 – 2.5% | Si |
| 0.1 – 0.4% | Sn |
| 0.6 – 1.5% | Mn |
| 0.005 – 0.020% | P and/or |
| 0.002 – 0.020% | B |

with P and B together making up less than 0.020%,
the remainder being coppper,
Pb impurities being less than 0.02% and other impurities totalling less than 0.5%.

2. Filler material according to claim 1, characterised by the following composition in per cent by weight:

1.80% Si,
0.20% Sn,
1.00% Mn,
0.008% P,
0.01% B,
the remainder being copper,
Pb impurities being less than 0.02%, and other impurities totalling less than 0.2%.

3. Electrode, characterised in that it is made from a filler material according to claim 1 or 2.